# EUROPÄISCHE PATENTSCHRIFT

(11) **EP 0 269 902 B1**
(45) Veröffentlichungstag und Bekanntmachung des Hinweises auf die Patenterteilung: **25.08.1993**
(21) Anmeldenummer: 87116277.2
(22) Anmeldetag: 05.11.1987
(51) Int. Cl.: G01S 17/10, G01S 7/48

(54) **Verfahren und Einrichtung zum Bestimmen der Entfernung zwischen zwei Objekten, insbesondere zwei Kraftfahrzeugen**
Process and device for measuring the distance between two objects, in particular between vehicles
Procédé et dispositif pour mesurer la distance entre deux objets, en particulier entre deux véhicules à moteur

(30) Priorität: 27.11.1986 DE 3640449
(43) Veröffentlichungstag der Anmeldung: 08.06.1988
(73) Patentinhaber: Deutsche Aerospace AG, 81663 München (DE)
(72) Erfinder: Spies, Hans, D-8068 Pfaffenhofen (DE); Spies, Martin, D-8068 Pfaffenhofen 1 (DE)

(56) Entgegenhaltungen:
- DE-A- 2 921 792
- DE-A- 3 020 996
- DE-A- 3 130 966
- DE-A- 3 214 938
- DE-A- 3 536 659

## Beschreibung

Die Erfindung bezieht sich auf ein Verfahren und eine Einrichtung zum Bestimmen der Entfernung zwischen zwei Objekten, insbesondere zwei Kraftfahrzeugen, gemäß den Oberbegriffen der unabhängigen Patentansprüche.

Die Bestimmung der Entfernung zwischen zwei Objekten wird z.B. in sogenannten Abstandswarngeräten verwendet, die in Kraftfahrzeugen eingebaut sind. Von dem Abstandswarngerät des einen Kraftfahrzeuges wird ein kurzer Laserimpuls abgestrahlt, der an einem Hindernis, z.B. einem vorausfahrenden Kraftfahrzeug reflektiert wird. Aus der Laufzeit des Lichtimpulses kann dann die Entfernung bestimmt werden.

Aus der DE-A-35 36 659 ist eine Vorrichtung zur Wolkenhöhenmessung bekannt, bei der das Ausgangssignal des Empfängers während Zeitschlitzen integriert wird, die mit der Sendefrequenz aufeinanderfolgen, jedoch zeitlich in Bezug auf die Aussendung der Lichtimpulse verschoben sind. Ein Betriebsprogramm arbeitet mit fest vorgegebener Rauschschwelle.

In der DE-A-30 20 996 ist eine Einrichtung zur Bestimmung einer Auslöseentfernung beschrieben, die mittels Laufzeitmessung von Laserimpulsen arbeitet, wobei der reflektierte Impuls mindestens zwei Entfernungstoren für unterschiedliche Entfernungen - mit nachgeschalteten Integratoren - zugeführt wird. Bei der Signalverarbeitung wird ein Grundpegel an Störungen festgelegt oder auch durch besondere Maßnahmen unterdrückt.

Der Erfindung liegt die Aufgabe zugrunde, ein Verfahren und eine Einrichtung der in Rede stehenden Art anzugeben, mit denen auch stark verrauschte Empfangssignale zu einer genauen Empfangsbestimmung herangezogen werden können.

Diese Aufgabe ist gemäß der Erfindung durch die in den kennzeichnenden Teilen der unabhängigen Patentansprüche angegebenen Merkmale gelöst.

Demgemäß wird zur Entfernungsbestimmung das differenzierte Empfangssignal herangezogen. Für dieses differenzierte Empfangssignal wird eine Amplitudenhäufigkeitverteilung aufgestellt. Vorzugsweise erfolgt dies dadurch, daß das Empfangssignal vor oder nach der Differenzierung in einzelne lückenlos aneinander anschließende Zeitabschnittssignale aufgeteilt wird, die lückenlos aneinander anschließenden Entfernungsabschnitten entsprechen. Innerhalb eines jeden Zeitabschnittes wird eine mittlere Amplitude ermittelt, für sämtliche derart ermittelten Amplituden wird dann die Amplitudenhäufigkeitsverteilung aufgestellt.

Ist z. B. das Empfangssignal infolge Nebels stark verrauscht, so ergibt sich eine Amplitudenhäufigkeitsverteilung ähnlich einer Gaußschen Kurve. Der Maximalwert der Amplitudenhäufigkeitsverteilung wird für das auszuwertende differenzierte Empfangssignal als Nullwert festgelegt. Zu beiden Seiten dieses Nullwertes werden Amplitudenschwellen festgelegt, wobei zur Auswertung nur Signalanteile des differenzierten Empfangssignales berücksichtigt werden, die unterhalb bzw. oberhalb der unteren bzw. oberen Amplitudenschwelle liegen. Die Amplitudenschwellen sind hierbei so gewählt, daß der Rauschanteil innerhalb des differenzierten Empfangssignales praktisch wegfällt, so daß im wesentlichen nur die relativ hohen, aber kurz wirkenden Amplituden berücksichtigt werden, die dem reflektierten Lichtimpuls zuzuordnen sind. Die Festlegung der unteren und oberen Amplitudenschwelle kann entweder empirisch oder aber innerhalb der Auswerteschaltung autovariabel (adaptiv) ausgelegt werden. Hierzu wird zu beiden Seiten des häufigst auftretenden Amplitudenwertes jeweils eine auf der Amplitudenhäufigkeitsverteilung liegende Rauschmittelwertamplitude bestimmt, die z. B. nur halb so oft auftritt wie die häufigst auftretende Amplitude. Werden diese Rauschmittelwertamplituden noch um einen gewissen Betrag verringert oder vergrößert, so erhält man die untere bzw. obere Amplitudenschwelle. Der Betrag der Verringerung bzw. Vergrößerung entspricht bevorzugt einem Wert, der der Differenz zwischen der häufigst auftretenden Amplitude und der jeweiligen Rauschmittelwertamplitude entspricht. Bei einer solchen Festlegung kann zuverlässig davon ausgegangen werden, daß die Rauschanteile innerhalb des differenzierten Empfangssignales nicht mehr berücksichtigt werden. Es können noch weitere Amplutudenwerte festgelegt werden, deren Anzahl durch die Praxis bestimmt wird. So erhält man z. B. eine weitere Verringerung bzw. Vergrößerung der ersten Amplitudenschwellen um 50 % nach unten und oben jeweils eine zweite untere bzw. obere Amplitudenschwelle. Diese dann insgesamt vier Amplitudenschwellen können in Verbindung mit den durch den häufigst auftretenden Amplitudenwert definierten Nullpunkt zur Überwachung des Zeitverlaufes der berücksichtigten differenzierten Empfangssignale herangezogen werden. Hierzu werden die Schnittpunkte des Empfangssignales in den berücksichtigten Bereichen mit den Schwellwerten und dem Nullpunkt bestimmt und mit einem Referenzimpuls verglichen, der aus dem ausgesendeten Lichtimpuls etwa dadurch gewonnen wird, daß ein Teil von dessen Energie beim Aussenden direkt in den Empfänger eingekoppelt wird. Ergeben sich für das ebenso differenzierte Referenzsignal und das dem reflektierten Lichtimpuls zugeordnete Empfangssignal korrespondierende Zeitabläufe, so kann das berücksichtigte Empfangssignal eindeutig dem reflektierten Lichtimpuls zugeordnet werden. Eine solche Zuordnung ist insbesondere dann von Vorteil, wenn trotz des erwähnten Separierens zu berücksichtigender Signalanteile in dem differenzierten Empfangssignal noch Anteile vorhanden sind, die unter- bzw. oberhalb der erwähnten ersten Amplitudenschwellen liegen. Dies kann z. B. dann auftreten, wenn der ausgesendete Lichtimpuls nach einer gewissen Entfernung auf eine Nebelbank auftrifft. Für diese rückgestreuten Signale ist jedoch in jedem Falle der Zeitverlauf ein anderer als für die Lichtimpulse. Die Bewertungsschwellen werden bei jeder Messung aus der Amplitudenhäufigkeitsverteilung neu ermittelt, so daß Änderungen der Umweltbedingungen sofort Berücksichtigung finden.

In einer Einrichtung gemäß der Erfindung werden als Empfangsschaltung bevorzugt zwei elektronisch getastete Empfangstore verwendet, deren Entfernungsbereiche lückenlos aneinander anschließen. Die Differentiation des Empfangssignales kann dann durch eine einfache Differenzbildung der Signale dieser Entfernungstore erfolgen.

Selbstverständlich sind auch andere Empfangsschaltungen möglich, z. B. solche mit nur einem einzigen elektronisch getasteten Empfangstor oder solche mit einer Vielzahl von jeweils einzelnen lückenlos aneinander anschließenden Entfernungsbereichen zugeordneten Empfangstoren, die dann nicht getastet zu werden brauchen.

Es können auch mehrere derartige Empfangsschaltungen verwendet werden. Jeder Empfänger weist daßei einen bestimmten Öffnungswinkel auf, die Öffnungswinkel der einzelnen Empfänger schließen sich lückenlos oder geringfügig überlappend aneinander an. In einem solchen Fall können Empfangssignale aus unterschiedlichen Einfallsrichtungen berücksichtigt werden.

Weitere Ausgestaltungen der Erfindung gehen aus den Unteransprüchen hervor.

Die Erfindung ist in einem Ausführungsbeispiel anhand der Zeichnung näher erläutert.

In der Zeichnung stellen dar.
- Fig. 1: ein schematisches Blockschaltbild einer Einrichtung gemäß der Erfindung zum Bestimmen der Entfernung zwischen zwei Kraftfahrzeugen;
- Fig. 2a - 2e: schematische Diagramme zur Erläuterung der Entfernungsbestimmung;
- Fig. 3: ein schematisches Diagramm einer Amplitudenhäufigkeitsverteilung eines differenzierten Empfangssignales.

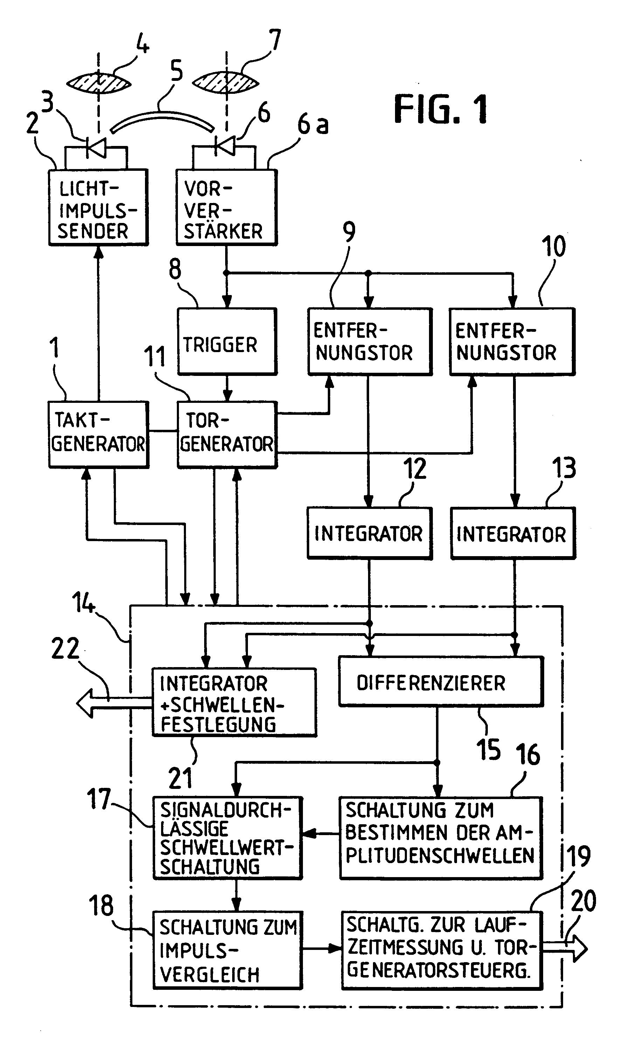

In einer in Fig. 1 dargestellten Einrichtung zur Bestimmung der Entfernung zwischen einem Kraftfahrzeug und einem Hindernis, z. B. einem zweiten Kraftfahrzeug, wird von einem Taktgenerator 1 ein Lichtimpulssender 2 mit einer Laserdiode 3 angesteuert. Das ausgesendete Licht der Laserdiode fällt durch eine Ausgangsoptik 4. Ein geringer Leistungsanteil des Lichtimpulses wird über einen Lichtleiter 5 direkt auf eine Empfangsdiode 6 gerichtet, während die reflektierten Lichtimpulse und etwaiges rückgestreutes Licht über eine Eingangsoptik 7 auf die Empfangsdiode 6 gelangt. Das Ausgangssingal der Empfangsdiode 6 wird in einem Vorverstärker 6a verstärkt und einmal einem Trigger 8 sowie zwei Entfernungstoren 9 und 10 zugeführt. Über einen Torgenerator 11, der vom Trigger 8 angesteuert und vom Taktgenerator 1 auf "BEREIT" gestellt wird, werden die Entfernungstore 9 und 10 aufgetastet. Das Ausgangssignal der Entfernungstore 9 und 10 wird jeweils einem Integrator 12 bzw. 13 zugeführt, deren Ausgänge mit einer prozessorgesteuerten Auswerteschaltung 14 verbunden sind. Ferner werden der Auswerteschaltung noch die Steuereingänge und Signale des Taktgenerators 1 und des Torgenerators 11 zur Zeitsteuerung zugeführt.

Durch Einstellen der Frequenzen von Taktgenerator 1 und der Vorgabezeit für den Torgenerator 11 werden die Lichtimpulsfolge bzw. die Auftastfrequenz sowie zeitliche Lage der Entfernungstore 9 und 10 festgelegt. Jedes Entfernungstor empfängt daher Strahlung aus einem bestimmten Entfernungsbereich, der z. B. für Kraftfahrzeuge jeweils auf einen Meter festgelegt wird. Die Integratoren 12 und 13 dienen einmal zum Glätten des Signales und zum anderen zum Festlegen einer mittleren Amplitude innerhalb der einzelnen durch die Auftastzeitpunkte festgelegten Zeitabschnitte.

Für die Auswerteschaltung 14 sind weder die Prozessornoch die Zeitsteuerung dargestellt, sondern lediglich die für die Signalauswertung erforderlichen Schaltungen, die sämtlich z. B. mit einem Mikroprozessor realisiert werden können. Dies sind im einzelnen ein Differenzierer 15, eine Schaltung 16 zum Bestimmen von Amplitudenschwellen, eine signaldurchlässige Schwellwertschaltung 17, eine Schaltung 18 zum Impulsvergleich und eine Schaltung 19 zur Laufzeitmessung und Torgeneratorsteuerung und damit Entfernungsbestimmung. Die Entfernungswerte werden an einem Ausgang 20 angegeben.

Zusätzlich ist in der prozessorgesteuerten Auswerteschaltung 14 noch ein Integrator 21 vorgesehen, der mit den Ausgängen der beiden Integratoren 12 und 13 verbunden ist. An dessen Ausgang 22 wird ein Sichtweitensignal abgegeben, wie weiter unten erläutert.

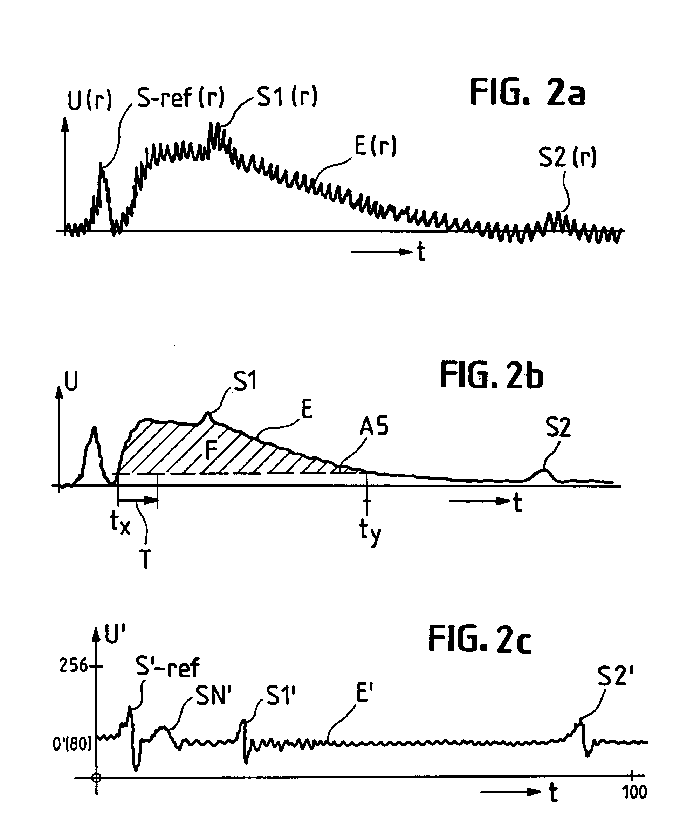

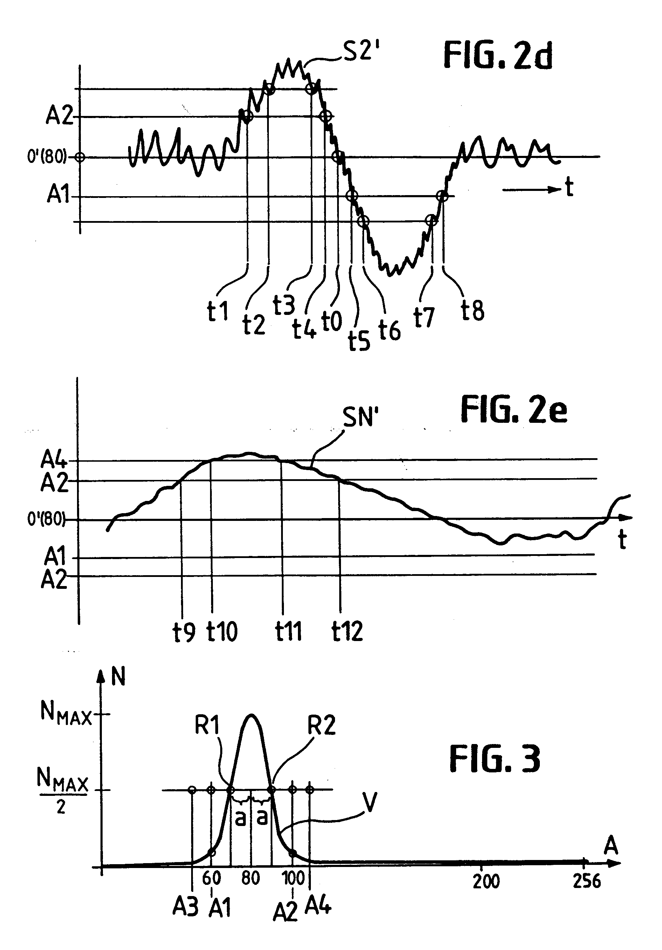

Die eigentliche Auswertung sei anhand der Signaldiagramme in den Fig. 2 und 3 erläutert:
In Fig. 2a ist ein verrauschtes Empfangssignal E(r) als Spannung über der Zeit aufgetragen, wie es am Ausgang des Vorverstärkers 7 anliegt. Ein solches Empfangssignal kommt z. B. zustande, wenn Entfernungen im Nebel gemessen werden sollen. Man sieht zunächst das Referenzsignal S-ref(r), das durch die Einkopplung eines Teiles des ausgesendeten Lichtimpulses in die Empfangsdiode 6 zustande kommt. Der folgende Signalanstieg entspricht dem von einer Nebelwand rückgestreutem Licht. Innerhalb des im folgenden in der Spannung abfallenden verrauschten Empfangssignales ist ein erstes Nutzsignal S1(r) und später noch ein weiteres Nutzsignal S2(r) enthalten, die tatsächlich reflektierten Lichtimpulsen zuzuordnen sind.

In Fig. 2b ist das geglättete Empfangssignal E wiederum als Spannung U über der Zeit t aufgetragen. Dieses Spannungssignal liegt in der Schaltung gemäß Fig. 1 am Ausgang der Integratoren 12 bzw. 13 an. Es sei darauf hingwiesen, daß dieses geglättete Signal entsprechend der Entfernungstore ein gestuftes Signal ist, jedoch sind die Abstände zwischen den einzelnen Stufen so gering, daß hier die analoge Darstellung gewählt wurde.

Man sieht wiederum zunächst das Referenzsignal S-ref, anschließend den Signalanstieg entsprechend dem von der Nebelwand rückgestreuten Licht und die Nutzsignale S1 und S2.

Dieses geglättete Empfangssignal E wird anschließend im Differenzierer 15 differenziert. Auch dieses Signal ist an und für sich ein Stufensignal. Hier ist aus den obigen Gründen jedoch wiederum die analoge Darstellung gewählt.

Das differenzierte Signal ist als Spannung U' über der Zeit aufgetragen, wobei als Nullpunkt ein verschobener Spannungswert 0' gewählt wird, um auch die durch die Differentiation negativen Signalanteile berücksichtigen zu können. Außerdem können durch einen nach oben verlegten Nullpunkt auch Bautoleranzen innerhalb der verwendeten Schaltungselemente ausgeglichen werden. Die Festlegung des verschobenen Nullpunktes 0' erfolgt automatisch in der Schaltung, wie weiter unten erläutert.

In dem Verlauf des differenzierten Empfangssignales E' sieht man aufeinanderfolgend das differenzierte Referenzsignal S'-ref sowie das erste und das zweite Nutzsignal S-1' und S-2'. Außerdem ist noch ein relativ hoher Signalbuckel SN' anschließend an das differenzierte Referenzsignal zu sehen. Dieser Signalbuckel entspricht dem Signalanstieg des Empfangssignales durch Rückstreuung an der Nebelwand.

Zur Festlegung des Nullbereiches und zur weiteren Auswertung des in Fig. 2c gezeigten differenzierten Empfangssignales E' werden zunächst ein Amplitudenbereich und ein Entfernungsbereich bestimmt. Der zu berücksichtigende Amplitudenbereich wird z. B. in 256 Abschnitte, der zu berücksichtigende Enfernungsbereich in 100 Abschnitte aufgeteilt. Diese 100 Abschnitte sind jeweils gleich groß und entsprechend 100 Zeitabschnitten des in Fig. 2c gezeigten differenzierten Empfangssignales und somit auch 100 Entfernungstoren von z. B. jeweils 1 m Breite. In der Schaltung 16 zum Bestimmen der Amplitudenschwellen wird zunächst eine Amplitudenhäufigkeitsverteilung gemäß Fig. 3 bestimmt. Auf der Abszisse sind die Amplitudenwerte, auf der Ordinate ist die Anzahl N der in dem Signal gemäß Fig. 2c auftretenden Amplitudenwerte dargestellt. Es ergibt sich dann die Verteilungskurve V gemäß Fig. 3. Diese Verteilungskurve hat für den dargestellten Fall ein Maximum Nmax für den Amplitudenwert 80, sie fällt zu beiden Seiten dieses Wertes ab. Ein Vergleich der Figuren 2c und 3 zeigt, daß dieser Amplitudenwert dem oben erwähnten verschobenen Nullpunkt 0' entspricht. Als nächstes werden sogenannte Rauschmittelwertamplituden R1 und R2 bestimmt, die auf der Verteilungskurve V liegen. Praxisgerechte Werte ergeben sich für den Ordinatenwert Nmax/2. Die Rauschmittelwertamplituden R1 und R2 liegen jeweils in einem Abstand a zu beiden Seiten des häufigst auftretenden Amplitudenwertes 80 und entsprechen in diesem Falle etwa den Amplituden 70 und 90. Diese Amplitudenwerte werden nochmals um einen bestimmten Betrag verringert bzw. vergrößert, in diesem Falle wiederum jeweils um den Abstand a. Diese Amplitudenwerte entsprechen dann einem unteren bzw. oberen Schwellwert A1 bzw. A2, in diesem Falle den Amplitudenwerten 60 bzw. 100. Aus der Verteilungskurve V ist ersichtlich, daß für diese Amplituden A1 und A2 innerhalb des differenzierten Empfangssignales E' nur noch sehr geringe Singalanteile vorhanden sind. Durch Antragen eines weiteren Abstandes, z. B. wiederum des Abstandes a werden zweite untere und obere Amplitudenschwellen A3 und A4 bestimmt.

Diese Amplitudenschwellen A1 bis A4 werden in die signaldurchlässige Schwellwertschaltung 17 eingegeben, der das differenzierte Empfangssignal E' gemäß Fig. 2c zugeführt wird. Aus den Figuren 2c und 2d ist ersichtlich, daß die Rauschanteile des differenzierten Empfangssignales E' praktisch alle im Schwellenbereich zwischen A1 und A2 liegen und somit bei der nachfolgenden Auswertung nicht mehr berücksichtigt werden. Die jetzt noch berücksichtigten Signale können zunächst tatsächlichen Nutzsignalen zugeordnet werden; in Fig. 2d ist dieses für das Nutzsignal S2' gezeigt.

Bei gewissen Umständen kann es jedoch vorkommen, daß noch andere Signale durch die signaldurchlässige Schwellwertschaltung 17 hindurchgelassen werden. Dies betrifft hier den erwähnten Signalbuckel SN'. Um auch diese Signale auszuschalten, wird das Ausgangssignal der signaldurchlässigen Schwellwertschaltung 17 in die Schaltung 18 zum Impulsvergleich eingeleitet. In dieser Schaltung werden die Zeitpunkte bestimmt, an denen die noch berücksichtigten Signale die Schwellen A1 bis A4 schneiden. Für die schmalen, den reflektierten Lichtimpulsen zuzuordnenden Nutzsignale ergibt sich dann etwa ein Bild gemäß Fig. 2d für das Nutzsignal S2'. Man sieht, daß diese Zeitpunkte t1 bis t8 in relativ geringen Zeitabständen aufeinander folgen. Aus dieser Zeitenfolge kann dann die Impulsform bestimmt und z. B. anhand empirischer Daten oder durch Vergleich mit der Impulsform des Referenzsignales S1-ref eindeutig einem Nutzsignal zugeordnet werden.

In Fig. 2e ist ein ähnliches Diagramm für den Signalbuckel SN' dargestellt, der die oberen Amplitudenschwellen A2 und A4 zu den Zeiten t9, t10, t11 und t12 schneidet. Der daraus berechnete Signalverlauf kann keinem reflektierten Lichtimpuls zugeordnet werden und wird daher für die weitere Signalauswertung nicht mehr berücksichtigt. Am Ausgang der Schaltung 18 zum Impulsvergleich liegen dann nur noch die Nutzsignale an. Die Entfernungsbestimmung wird dann in der Schaltung 19 mit Hilfe einer herkömmlichen Laufzeitmessung vorgenommen. Am Ausgang 20 der prozessorgesteuerten Auswerteschaltung 14 liegen somit nur die tatsächlichen Entfernungssignale an. Diese können in bekannter Weise weiter behandelt werden. so z. B. dem Fahrer angezeigt werden; außerdem ist es möglich, in gewissen Fällen z.B. direkt einen Bremsvorgang des Kraftfahrzeuges automatisch auszulösen. Da die Meßintervalle z. B. im Bereich von wenigen Millisekunden liegen, kann daraus auch eine Annäherungsgeschwindigkeit abgeleitet werden.

Die beschriebene Signalauswertung, die durch eine Signalauswertung der Amplitudenhäufigkeitsverteilung unterstützt wird, ist adaptiv und paßt sich automatisch den jeweiligen Verhältnissen an. Es wird automatisch ein Nullpunkt für die auszuwertenden Signale festgelegt, der anhängig ist von dem Rauschanteil, aber auch den Toleranzen der Bauelemente, die auf diese Weise ausgeglichen werden, so daß auch billige Bauelemente verwendet werden können. Durch die Unterstützung der Signalauswertung mit Hilfe der Signalhäufigkeitsverteilung werden die Rauschanteile des Empfangssignales praktisch eliminiert, so daß nur die scharfen Nadelimpulse entsprechend den reflektierten Lichtimpulsen verwertet werden. Ebenso werden automatisch die Amplitudenschwellen bestimmt, wobei es selbstverständlich möglich ist, noch mehr als die erwähnten vier Amplitudenschwellen zu bestimmen. Liegen z. B. günstige atmosphärische Bedingungen vor, so wird das Empfangssignal nicht so stark verrauscht sein, ebenso ergeben sich kaum Anteile, die durch rückgestreutes Licht verursacht werden. Dementsprechend wird dann auch die Amplitudenhäufigkeitsverteilung gemäß Fig. 3 um den Maximalwert einen wesentlich schmaleren Verlauf aufweisen.

Durch den Impulsvergleich mit Hilfe einer Überwachung der Zeitenfolge, wann die berücksichtigten Signale die einzelnen Amplitudenschwellen schneiden, können auch bei ungünstigen Bedingungen die Nutzsignale einwandfrei separiert werden. Fordert bei herkömmlichen Techniken, so z. B. einer Entfernungsbestimmung mit Hilfe von Radar, das Auflösungsvermögen und die Fehlerkennungsrate ein Signal/Rauschverhältnis von 10 dB, so kann mit der Erfindung einfach bei gleichen Randbedingungen ein Wert von minus 3 dB erreicht werden.

Wie oben erwähnt, wird das geglättete Empfangssignal E zusätzlich noch dem Integrator 21 zugeführt. In diesem Integrator 21 wird zunächst eine Schwelle festgelegt, und zwar bevorzugt in der gleichen Weise, wie dieses für das differenzierte Empfangssignal beschrieben wird. Demgemäß wird eine Amplitudenhäufigkeitsverteilung des Empfangssignales und daraus eine Schwelle A5 bestimmt; vgl. Fig. 2b. Das über dieser Schwelle liegende Empfangssignal wird in den Integrator integriert; dieses Integral entspricht der in Fig. 2b schraffiert dargestellten Fläche F und ist ein Maß für die Rückstreuung des ausgesendeten Lichtes. Die Integration erfolgt jedoch nur dann, wenn das geglättete Empfangssignal E eine vorgegebene Zeitspanne T oberhalb dieser Schwelle A5 verbleibt. Im dargestellten Fall wird das Empfangssignal E zwischen den Zeiten tx und ty aufintegriert. Bei schlechten Sichtbedingungen wird diese Fläche F entsprechend groß sein, bei guten Sichtbedingungen entsprechend klein. Das am Ausgang 22 abgegebene Sichtweitensignal verhält sich entsprechend umgekehrt. Auch in diesem Falle ist es möglich, z. B. die Geschwindigkeit des Kraftfahrzeuges aufgrund des Sichtweitensignales auf einen vom Fahrer nicht zu beeinflussenden Wert zu begrenzen. Die erwähnte Schwellenbestimmung, die im übrigen auch empirisch erfolgen kann, ist unabhängig von der Signalverarbeitung zur Entfernungsbestimmung. Die Bewertung der Sichtweite jedoch erfolgt in Abhängigkeit von der Entfernung des auftretenden Nebelsignals.

## Patentansprüche

1. Verfahren zum Bestimmen der Entfernung zwischen zwei Objekten, insbesondere zwei Kraftfahrzeugen, wobei von dem ersten Objekt ein Lichtimpuls abstrahlt und dieser von dem zweiten Objekt zumindest teilweise in Richtung auf das erste Objekt reflektiert und dieser Anteil am Ort des ersten Objektes mit einem Empfänger empfangen wird, wonach aus dem Empfangssignal der reflektierte Lichtimpuls separiert, anschließend die Laufzeit des Lichtimpulses von dem ersten zu dem zweiten Objekt und wieder zurück und daraus die Entfernung zwischen den Objekten bestimmt und das Empfangssignal differenziert wird, **dadurch gekennzeichnet,** daß für das differenzierte Empfangssignal eine Amplitudenhäufigkeitsverteilung aufgestellt und daraus der häufigst auftretende Amplitudenwert bestimmt wird, daß zu beiden Seiten dieses häufigst auftretenden Amplitudenwertes zumindest jeweils ein Wert als untere bzw. obere Amplitudenschwelle ausgewählt wird, daß das differenzierte Empfangssignal nur unterhalb bzw. oberhalb der Amplitudenschwellen berücksichtigt wird und daß nur solche Signalanteile dem reflektierten Lichtimpuls zugeordnet werden, die diese Amplitudenschwellen unter- bzw. überschreiten.

2. Verfahren nach Anspruch 1, **dadurch gekennzeichnet**, daß der Signalverlauf der berücksichtigten Signalanteile des differenzierten Empfangssignales mit einem aus dem ausgesendeten Lichtimpuls abgeleiteten Referenzsignalverlauf verglichen wird und nur solche Signalanteile weiterverarbeitet werden, bei denen Ähnlichkeiten mit dem Referenzsignalverlauf festgestellt werden.

3. Verfahren nach Anspruch 1 oder 2, **dadurch gekennzeichnet**, daß zur Festlegung der unteren und oberen Amplitudenschwellen auf der Amplitudenhäufigkeitsverteilung eine untere und obere Rauschmittelwertamplitude bestimmt wird, und daß die Amplitudenschwellen kleiner bzw. größer als die untere bzw. obere Rauschmittelwertamplitude gewählt werden.

4. Verfahren nach einm der vorhergehenden Ansprüche, **dadurch gekennzeichnet**, daß das Empfangssignal vor oder nach der Differenzierung in einzelne zeitlich lückenlos aneinander anschließende Zeitabschnittssignale aufgeteilt wird.

5. Verfahren nach einem der vorhergehenden Ansprüche, **dadurch gekennzeichnet**, daß ein Teil des ausgesendeten Lichtimpulses beim Aussenden direkt in den Empfänger als Referenzsignal eingekoppelt wird, daß jeweils zumindest zwei untere und obere Amplitudenschwellen festgelegt werden, daß die Zeitpunkte bestimmt werden, zu denen das differenzierte Empfangssignal die Amplitudenschwellen schneidet, und daß die Zeitenfolge dieser Schnittpunkte mit dem Amplituden/Zeitverlauf des differenzierten Referenzsignales verglichen wird.

6. Verfahren nach einem der vorhergehenden Ansprüche, **dadurch gekennzeichnet**, daß das Empfangssignal integriert wird, sobald es eine vorgegebene Schwelle übersteigt und oberhalb dieser Schwelle für eine vorgegebene Zeitspanne verbleibt.

7. Einrichtung zum Bestimmen der Entfernung zwischen zwei Objekten nach dem Verfahren des Anspruchs 1, insbesondere zwei Kraftfahrzeugen, mit einem Lichtimpulssender (2) und einem Empfänger (6a) sowie einer Auswerteschaltung (14) am Ort des ersten Objektes zum Bestimmen der Laufzeit eines Lichtimpulses vom ersten zum zweiten Objekt und wieder zurück und anschließendem Ermitteln der Entfernung mit einer prozessorgesteuerten Auswerteschaltung (14), die eine Differenzierschaltung (15) zum Differenzieren des Empfangssignales aufweist, **gekennzeichnet** durch eine Schaltung (16) zum Ermitteln einer Amplitudenhäufigkeitsverteilung für das differenzierte Eingangssignal und zum Festlegen zumindest jeweils einer unteren und oberen Amplitudenschwelle (A1 bis A4) zu beiden Seiten des am häufigst auftretenden Amplitudenwertes,
eine Schwellwertschaltung (17) für das differenzierte Empfangssignal, deren Schwellen den festgelegten unteren und oberen Amplitudenschwellen entsprechen und
eine Schaltung zur Laufzeitmessung, die auf diejenigen Signalanteile (S1', S2') angewendet wird, die die unteren bzw. oberen Amplitudenschwellen unter- bzw. überschreiten.

8. Einrichtung nach Anspruch 7, **dadurch gekennzeichnet**, daß der Schwellwertschaltung (17) eine Schaltung (18) zum Impulsvergleich der berücksichtigten Signalanteile mit einem aus dem ausgesetzten Lichtimpuls durch Differentiation (in 15) abgeleiteten Referenzsignal nachgeschaltet ist.

9. Einrichtung nach Anspruch 7 oder 8, **dadurch gekennzeichnet**, daß zur Ausbildung der Differenzierschaltung (15) zwei zeitlich getastete Empfangstore (9, 10) vorgesehen sind, denen jeweils ein Integrator (12, 13) nachgeschaltet ist, wobei die Ausgänge der Integratoren (12, 13) mit der Differenzierschaltung (15) verbunden sind.

10. Einrichtung nach einem der Ansprüche 7 bis 9, **dadurch gekennzeichnet**, daß die prozessorgesteuerte Auswerteschaltung (14) einen Integrator (21) aufweist, der mit dem Empfänger (6 bis 13) verbunden ist und der das Empfangssignal (E) oberhalb einer Schwelle (A5) aufintegriert, sofern das Empfangssignal eine vorgegebene Zeitspanne (T) oberhalb dieser Schwelle (A5) verbleibt.

## Claims

1. Method for determining the distance between two objects, in particular two motor vehicles, wherein a light pulse is transmitted from the first object and reflected by the second object at least partially in the direction of the first object, and this portion is received at the location of the first object by means of a receiver, whereafter the reflected light pulse is separated from the received signal, and then the transit time of the light pulse from the first object to the second and back, and as a result thereof the distance between the objects, is determined and the received signal differentiated, **characterised in that** the differentiated receive signal establishes an amplitude-frequency distribution wherefrom the most frequent amplitude value is determined, that on both sides of this most frequently occurring amplitude value at least one value is selected as the lower or upper amplitude threshold, that the differentiated receive signal is considered only below or above the amplitude thresholds, and that only those signal portions which drop below or exceed these amplitude thresholds are associated with the reflected light pulse.

2. Method according to claim 1, **characterised in that** the signal characteristics of the considered signal portions of the differentiated receive signal are compared to reference-signal characteristics which have been derived from a transmitted light pulse, and that only those signal portions are processed further which have a detected similarity with the reference-signal characteristics.

3. Method according to claim 1 or 2, **characterised in that,** for the purpose of determining the lower and upper amplitude thresholds, a lower and upper mean noise amplitude is determined, and that the amplitude thresholds are chosen to be smaller or greater than the lower or upper mean-noise amplitude respectively.

4. Method according to one of the above claims, **characterised in that** the receive signal is before or after differentiation divided into individual temporally completely adjoining time-section signals.

5. Method according to one of the above claims, **characterised in that** a portion of the transmitted light pulses is on transmission coupled directly into the receiver as a reference signal, that at least two respective lower and upper amplitude thresholds are set, that the times are determined at which the differentiated receive signal intersects the amplitude thresholds, and that the time sequence of these intersecting points is compared to the amplitude/time characteristics of the differentiated reference signal.

6. Method according to one of the above claims, **characterised in that** the receive signal is integrated as soon as it exceeds a specified threshold and remains above said threshold for a specified length of time.

7. Device for determining the distance between two objects according to the method of claim 1, in particular two motor vehicles, comprising a light-pulse transmitter (2) and a receiver (6a) as well as an evaluation circuit (14) at the location of the first object for determining the transit time of a light pulse from the first object to the second and back and subsequent determination of the distance by means of a processor-controlled evaluation circuit (14) which comprises a differentiating circuit (15) for differentiating the receive signal, **characterised by** a circuit (16) for determining an amplitude-frequency distribution for the differentiated input signal and for setting at least one respective lower and upper amplitude threshold (A1 to A4) on both sides of the most frequently occurring amplitude value,
a threshold circuit (17) for the differentiated receive signal, the thresholds of which correspond with the set lower and upper amplitude thresholds, and
a circuit for measuring the transit time, which is applied to those signal portions (S1', S2') which drop below or exceed the lower or upper amplitude thresholds respectively.

8. Device according to claim 7, **characterised in that** the threshold circuit (17) has at its output side a circuit (18) for pulse comparison of the considered signal portions with a reference signal which has been derived from an intermittent light pulse by way of differentiation (in 15).

9. Device according to claim 7 or 8, **characterised in that,** for the purpose of setting up the differentiating circuit (15), two time-probed receive gates (9, 10) are provided with a respective integrator (12, 13) at the output side, in which respect the outputs of the integrators (12, 13) are connected to the differentiating circuit (15).

10. Device according to one of claims 7 to 9, **characterised in that** the processor-controlled evaluation circuit (14) comprises an integrator (21), which is connected to the receiver (6 to 13) and which integrates the receive signal (E) above a threshold (A5) provided that the receive signal remains above said threshold (A5) for a specified period of time.

## Revendications

1. Procédé pour déterminer la distance entre deux objets, notamment deux véhicules automobiles, selon lequel l'un des objets émet une impulsion lumineuse qui est réfléchie au moins partiellement par le deuxième objet en direction du premier et on capte cette fraction au moyen d'un récepteur au niveau du premier objet, à la suite de quoi on sépare du signal reçu l'impulsion lumineuse réfléchie, puis on détermine le temps de parcours de l'impulsion lumineuse du premier objet vers le second et retour et, à partir de celui-ci, la distance séparant les objets et on différencie le signal reçu, caractérisé par le fait que l'on établit pour le signal reçu différencié une courbe de Gauss des amplitudes et on détermine à partir de celle-ci l'amptitude qui apparaît le plus fréquemment, par le fait que l'on sélectionne, de part et d'autre de cette amplitude la plus fréquente, au moins une valeur en tant que seuil d'amplitude inférieur ou supérieur, par le fait que l'on ne prend en compte que le signal différencié situé au-dessous ou au-dessus des seuils d'amplitude et par le fait que l'on n'associe à l'impulsion lumineuse réfléchie que le parties de signal qui sont inférieures ou supérieures auxdits seuils d'amplitude.

2. Procédé selon la revendication 1, caractérisé par le fait que l'on compare à une courbe de signal de référence dérivée de l'impulsion lumineuse émise la courbe des parties prises en compte du signal reçu différencié et on n'exploite que les parties de signal pour lesquelles on relève des similitudes avec la courbe de signal de référence.

3. Procédé selon la revendication 1 ou 2, caractérisé par le fait que, pour définir les seuils d'amplitude inférieurs ou supérieurs sur la courbe de Gauss des amplitudes, on détermine une amplitude inférieure et supérieure de bruit moyen et par le fait que l'on choisit les seuils d'amplitude inférieurs ou supérieurs à l'amplitude inférieure ou supérieure de bruit moyen.

4. Procédé selon l'une des revendications précédentes, caractérisé par le fait que l'on divise le signal reçu, avant ou après différenciation, en signaux d'intervalles de temps qui se succèdent sans espace dans le temps.

5. Procédé selon l'une des revendications précédentes, caractérisé par le fait que lors de l'émission, on envoie directement au récepteur une partie de l'impulsion lumineuse émise, par le fait que l'on définit chaque fois au moins deux seuils inférieurs et supérieurs d'amplitude, par le fait que l'on détermine les instants où le signal reçu différencié coupe les seuils d'amplitude et par le fait que l'on compare la succession de ces points d'intersection à la courbe amplitude/temps du signal de référence différencié.

6. Procédé selon l'une des revendications précédentes, caractérisé par le fait que l'on intègre le signal reçu dès que celui-ci dépasse un seuil prédéterminé et reste supérieur à ce seuil pendant un laps de temps prédéterminé.

7. Dispositif pour déterminer conformément au procédé selon la revendication 1 la distance séparant deux objets, en particulier deux véhicules automobiles, comportant un émetteur d'impulsions lumineuses (2) et un récepteur (6a) ainsi qu'un circuit de traitement (14) situé sur le premier objet, pour déterminer le temps de parcours d'une impulsion lumineuse du premier objet vers le second et retour et calculer la distance au moyen d'un circuit de traitement (14) commandé par processeur qui présente un circuit différenciateur (15) pour la différenciation du signal reçu, caractérisé par un circuit (16) pour déterminer une courbe de Gauss des amplitudes pour le signal d'entrée différencié et pour fixer au moins un seuil d'amplitude inférieur et un seuil d'amplitude supérieur (A1 à A4), de part et d'autre de l'amplitude moyenne apparaissant le plus fréquemment, par un circuit de seuil (17) pour le signal reçu différencié, dont les seuils correspondent aux seuils d'amplitude inférieurs et supérieurs fixés et par un circuit de mesure du temps de parcours qui est utilisé pour les parties de signal (S1', S2') qui sont inférieures voire supérieures aux seuils d'amplitudes inférieurs ou supérieurs.

8. Dispositif selon la revendication 7, caractérisé par le fait qu'un circuit (18) pour la comparaison des impulsions des parties de signal prises en compte avec un signal de référence dérivé par différenciation (en 15) de l'impulsion lumineuse émise est branché à la suite du circuit de seuil (17).

9. Dispositif selon la revendication 7 ou 8, caractérisé par le fait qu'il est prévu pour former le circuit différenciateur (15) deux portes de réception (9, 10) interrogées dans le temps, à la suite de chacune desquelles est branché un intégrateur (12, 13), les sorties des intégrateurs (12, 13) étant connectées au circuit différenciateur (15).

10. Dispositif selon l'une des revendications 7 à 9, caractérisé par le fait que le circuit de traitement (14) commandé par processeur comporte un intégrateur (21) qui est connecté au récepteur (6 à 13) et intègre le signal reçu (E) au-dessus d'un seuil (A5), dans la mesure où le signal reçu reste supérieur à ce seuil (A5) pendant un laps de temps (T) prédéterminé.
